# EUROPÄISCHE PATENTANMELDUNG

(11) **EP 1 394 530 A1**
(43) Veröffentlichungstag der Anmeldung: **03.03.2004**
(21) Anmeldenummer: 03018886.6
(22) Anmeldetag: 20.08.2003
(51) Int. Cl.: G01N 21/25, G01N 21/47, A01B 79/00, A01M 7/00, G01V 8/10

(54) **Vorrichtung zur berührungslosen Ermittlung des Pflanzbewuchses eines Feldabschnittes**

(30) Priorität: 27.08.2002 DE 10239129
(71) Anmelder: Amazonen-Werke H. Dreyer GmbH & Co. KG, 49205 Hasbergen (DE)
(72) Erfinder: Ruckelshausen, Arno, Prof.Dr.rer., 49080 Osnabrück (DE); Soppa, Wilfried,Prof.Dr. Ing., 49078 Osnabrück (DE); Linz, Andreas, Dipl.-Ing., 49076 Osnabrück (DE); Huntemann, Ludger, 49762 Fresenburg (DE); Massbaum, Frank, 49134 Wallenhorst (DE)

(57) **Zusammenfassung**

Vorrichtung zur berührlosen Ermittlung des Pflanzenbewuchses eines Feldabschnittes mit zumindest einer Licht aussendenden Lichtquelle und zumindest einem das reflektierende Licht empfangenden Sensor. Um mit möglichst preiswerten Sensorsystemen und einer hohen Funktionstauglichkeit ein optisches Sensorsystem zur Boden-/Pflanzenerkennung zu schaffen ist vorgesehen, dass die Lichtquelle zumindest eine Leuchtdiode ist.

## Beschreibung

Die Erfindung betrifft eine Vorrichtung gemäß des Oberbegriffes des Patentanspruches 1.

Derartige Vorrichtungen sind in der Literatur in vielfältiger Weise beschrieben bzw. in der Praxis bekannt.

Das Einsatzgebiet dieser Vorrichtung liegt im wesentlichen in der Landwirtschaft und im Umweltschutzbereich. An diese Vorrichtung werden die Anforderungen gestellt, eine Unterscheidung zwischen Boden und Grünpflanzen vorzunehmen. Hierzu wird ein Sensorsystem für diese Unterscheidung eingesetzt.

Das Sensorsystem soll eine Unterscheidung zwischen Boden und Grünpflanzen vornehmen. Dieses System kann eingesetzt werden im Rahmen einer gezielten Unkrautbekämpfung. Auf großen Brachflächen würde dort gespritzt werden, wo auch tatsächlich Unkraut vorhanden wäre.

Der größte Nachteil der bisher verwendeten Systeme liegt in dem hohen Preis. Dieser kommt vor allem durch den Einsatz teurer Bandpassfilter zustande. Diese Filter werden benötigt, um die Sensoren (Fotodioden) für einen diskreten Spektralbereich zu sensibilisieren.

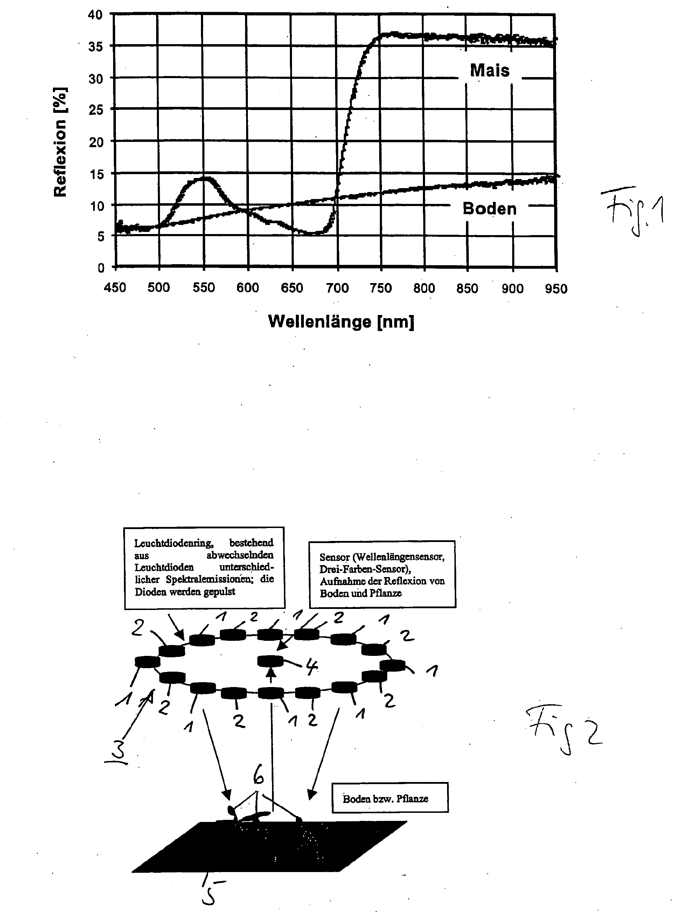

Das Prinzip zur Unterscheidung von Böden und Pflanzen beruht auf der Tatsache des unterschiedlichen Verhaltens im Bereich der elektromagnetischen Strahlung von 450 nm bis 950 nm, wie dieses in Fig. 1 gargestellt ist.

Im IR-Bereich (ab 750 nm) wird die Strahlung einer Maispflanze sehr stark und im Bereich um die 550 nm weniger stark reflektiert. Zwischen 650 und 700 nm sowie bei einer Wellenlänge kleiner 500 nm wird hingegen der größte Teil der Strahlung absorbiert.
Das Reflexionsverhalten einer Maispflanze ist typisch für das qualitative Reflexionsverhalten von Grünpflanzen.

Das Reflexionsverhalten der Pflanzen ist vom aktuellen physiologischen und phänologischen Zustand der Pflanzen abhängig, wobei im sichtbaren Wellenlängenbereich (400 nm-700 nm) größtenteils der Pigmentgehalt (v.a. Chlorophyll a+b, Carotinoide, Xantophyll) die Reflexion beeinflusst. Im Bereich von 700 nm bis 3000 nm ist der Wassergehalt entscheidend für die Reflexion.

Als Faustregel gilt: Je vitaler die Vegetation, um so höher der Pigment- und Wassergehalt, desto höher ist die Absorption im sichtbaren und kurzwelligen Infrarot- Bereich.

Die Reflexion von Boden dagegen verläuft über einen sehr großen spektralen Bereich nur schwach linear ansteigend. Auch hier ist der qualitative Verlauf bei verschieden Bodensorten nahezu gleich. Für den Boden gilt, je höher die Feuchtigkeit desto geringer ist der reflektierte Anteil.

Für eine Unterscheidung zwischen Boden und Pflanze wird das Prinzip der Quotientenbildung angewendet. Aus Fig. 1 Reflexionseigenschaften von Boden und Maispflanzen im Spektrum von 450 - 950 nm ist deutlich zu erkennen, dass im Wellenlängenbereich von ca. 600 bis ca. 700 nm Pflanzen weniger reflektieren als Boden. Ab ca. 700 nm bis über 950 nm reflektieren dagegen Pflanzen stärker als Erde. Um zu einer sicheren Unterscheidung zwischen Pflanzen und Boden zu gelangen, reicht es nicht aus, nur einen Wellenlängenbereich zu erfassen und die Messwerte auszuwerten. Die Maxima und Minima sind je nach Pflanze verschieden groß. Auch die Reflexionen der Bodenproben weisen quantitative Unterschiede auf. Zusätzlich würde eine Intensitätsveränderung (z.B. Fremdlicht) direkt auf den Messwert Einfluss nehmen. Wird jedoch der Quotient aus zwei signifikanten Wellenlängenbereichen gebildet, so ist das Ergebnis von den absoluten Werten unabhängig. Die Verwendung geeigneter Wellenlängen für die Quotientenbildung ermöglicht daher eine zuverlässige Unterscheidung von Pflanzen und Boden. Die signifikanten Wellenlängen werden so ausgewählt, dass mindestens bei einer der gewählten Spektralbereiche die Eigenschaften von Boden und Pflanze sich ausreichend stark unterscheiden.

Die Quotientenbildung soll am Beispiel der Verhältnisbildung mit den Wellenlängen 670 und 750 nm verdeutlicht werden. Pflanzen und Boden werden von oben mit einer Lichtquelle im Arbeitsbereich mit gleicher Intensität bestrahlt. Die reflektierte Strahlung wird mit Sensoren aufgenommen. Ein Sensort-Anteil) nimmt die reflektierte Strahlung bei 670 nm, der andere bei 750 nm auf. Die Quotientenbildung ist unabhängig von der absoluten Intensität der Beleuchtung, solange das Nutzsignal des.Sensors ausreichend groß ist. Bildet man das Verhältnis der jeweiligen Ausgangssignale der beiden Detektoren, so erhält man den entsprechenden Quotienten. Daraus lässt sich eine Aussage ableiten, ob eine Pflanze oder Boden detektiert wird.

Optoelektronische Systeme zur Unkrauterkennung und zur gezielten Bekämpfung werden seit 1992 der Praxis angeboten und sind inzwischen in mindestens zwei Varianten für den Einsatz in Obstplantagen, an Bahndämmen oder auf Brachland erhältlich.

Besonders der Einsatz auf Brachland zeigte bei Versuchen in USA und Australien ein hohes Einsparpotential von 70 bis zu 90 % bei ebenso hoher Erfolgsquote. In den Niederlanden erbrachten Versuche im kommunalen Bereich eine Spritzmitteleinsparung von durchschnittlich 57 %.

Der Erfindung liegt die Aufgabe zugrunde, mit möglichst preiswerten Sensorsystemen und einer hohen Funktionstauglichkeit ein optisches Sensorsystem zur Boden/Pflanzenerkennung zu schaffen.

Diese Aufgabe wird erfindungsgemäß dadurch gelöst, dass die Lichtquelle zumindest eine Leuchtdiode ist. Durch die Verwendung der Sensoren und der Auswahl passender Leuchtdioden können ohne weiteres weiter Kombinationen von Spektralbreichen zur Boden-/Pflanzenunterscheidung in Betracht gezogen werden. Gute Messergebnisse lassen sich dadurch erzielen, dass mehrere Leuchtdioden vorgesehen sind, welche um den Sensor herum angeordnet sind. Die Sensoren können als Wellenlängensensor, als Dreifarbensensor ausgebildet sein. Hierbei kann bevorzugter Weise vorgesehen sein, dass dem Dreifarbensensor ein IR-Blocker zugeordnet ist.

Um eine höhere Strahlungsintensität und sicherere Strahlpegel am Receiver zu erhalten, werden die LED im Impulsbetrieb eingesetzt. Hierbei senden die Leuchtdioden das Licht in gepulster Weise aus.

Eine vorteilhafte Anordnung von Lichtquelle und Sensor ergibt sich dadurch, dass die Lichtquelle und der Sensor als Baueinheit ausgebildet sind.

In manchen Fällen kann es sinnvoll sein, das Leuchtdioden für verschiedene Wellenlängenbereiche vorgesehen sind.

Des weiteren ist es möglich, dass der Sensor für verschiedene Wellenbereiche Empfangsdioden aufweist.

Um die von den Sensoren empfangenen Signale auswerten zu können, ist vorgesehen, dass die Lichtquelle und der Sensor mit einer elektrischen Auswerteeinheit verbunden sind, in welcher ein Auswerteprogramm zur Ermittlung des Pflanzenbewuchses des Feldabschnittes abgespeichert ist.

Besonders preiswert lässt sich die Sensoreinheit dadurch herstellen, dass die Sensoren ohne zusätzlichen Filter Einsatz für einen eingeschränkten Spektralbereich sensibilisiert sind.

Um auf den Einsatz von Filter verzichten zu können, kommen die im folgenden beschrieben Ansätze in Betracht.

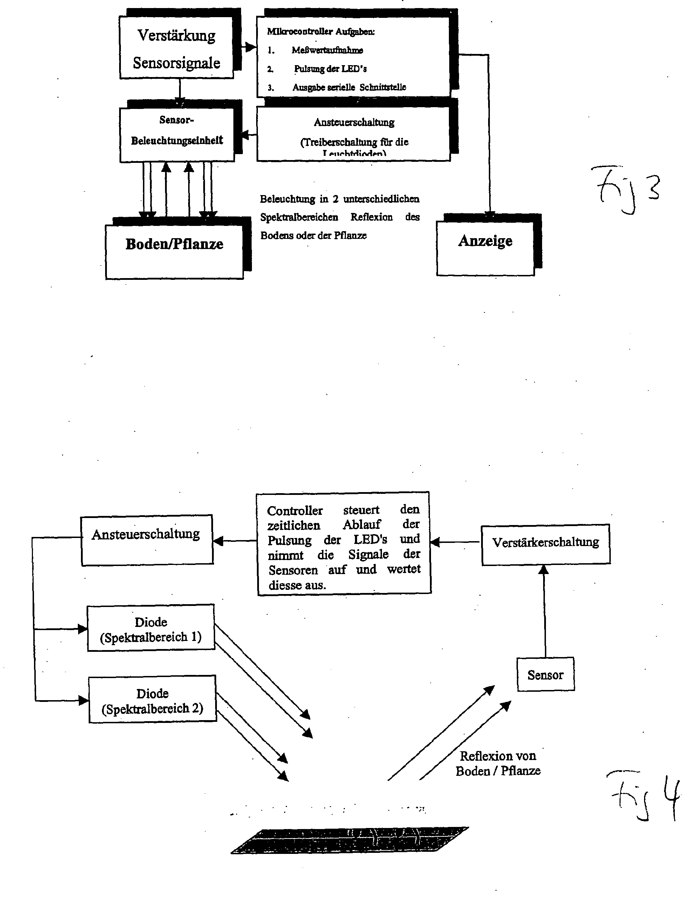

Als Emitter (Beleuchtung) kommen, wie Fig. 2 zeigt, Quellen in Betracht, die in einem schmalbandigen Wellenlängenbereich elektromagnetische Strahlung aussenden (z.B.: Leuchtdioden).

Die Leuchtdioden 1 und 2 werden im Pulsbetrieb eingesetzt um eine höhere Strahlungsintensität zu erreichen und sichere Signalpegel am Receiver (z.B. Fotodiode) zu erhalten (Sensor-Beleuchtungseinheit). Im Moment der Beleuchtung muss der Signalpegel, der durch die reflektierte Strahlung von Boden/Pflanze entsteht, abgefragt werden. Die Leuchtdioden 1 und 2 bestehen aus Leuchtdioden unterschiedlicher Spektralemissionen. Die Leuchtdioden 1 und 2 sind ringförmig als Leuchtdiodenringe 3 angeordnet. Innerhalb des Leuchtdiodenringes 3 ist der als Wellenlängensensor oder Dreifarbensensor ausgebildete Sensor 4 zur Aufnahme der Reflektion von Boden 5 und Pflanzen 6 angeordnet.

Ebenso wird der Reflexionspegel bei ausgeschalteter Beleuchtung von den Fotodioden gemessen (Fremdlichtanteil). Durch softwaremäßige Subtraktion beider Signalpegel wird das Fremdlicht elemeniert. Die Pulsung der LED's 1 und 2 gewährleistet die Unabhängigkeit vom Fremdlicht.

Für Messungen zur Boden/Pflanze Unterscheidung kommen verschiedene Spektralbereiche in Betracht (nach dem Reflexionsverhalten Boden/Pflanzen), die mit entsprechenden Leuchtdioden (Intensität, Spektrum) abgedeckt werden können.

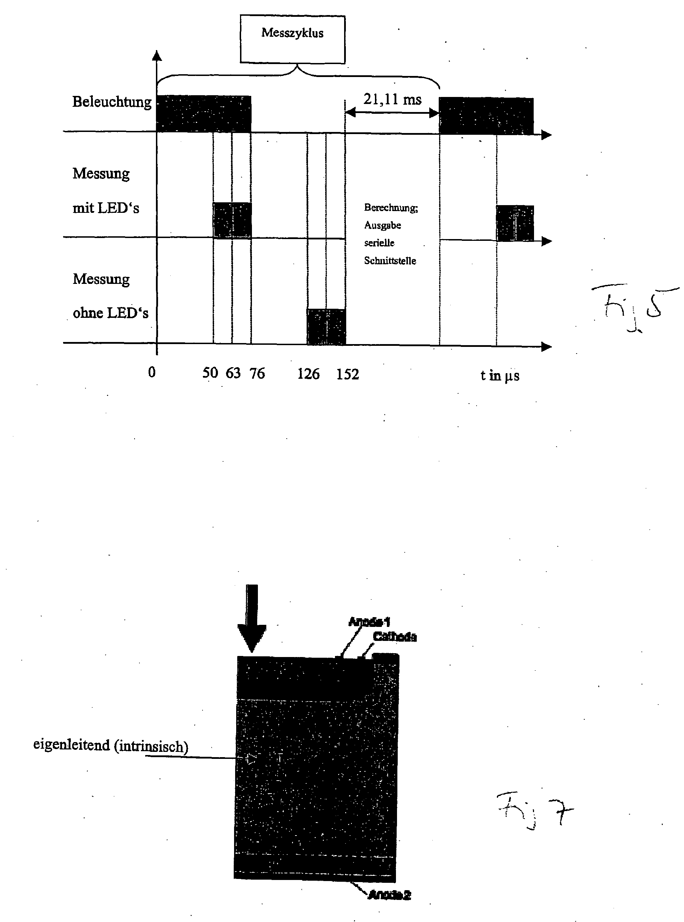

Als Empfänger kommen Sensoren 4 zum Einsatz, die ohne zusätzlichen Filtereinsatz für einen eingeschränkten Spektralbereich sensibilisiert sind. Die Fig. 3 zeigt beispielhaft ein Gesamtsystem zur Boden- 5 und Pflanzenerkennung 6.

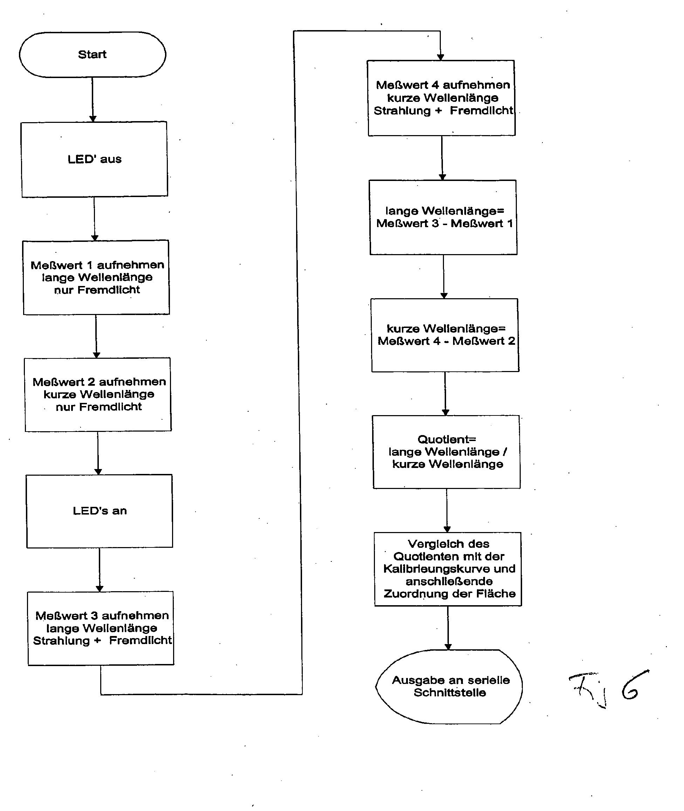

In dem Flussdiagramm gemäß Fig. 6 ist der Mess- und Auswertevorgang dargestellt.

Weitere Einzelheiten der Erfindung sind den übrigen Unteransprüchen, der Beispielsbeschreibung und den Zeichnungen zu entnehmen. Hierbei zeigen
- Fig. 1: die Reflektionseigenschaften von Boden- und Maispflanzen im Spektrum von 450 bis 950 nm,
- Fig. 2: die Anordnung einer Sensorbeleuchtungseinheit,
- Fig. 3: das Blockschaltbild des Gesamtschaltsystems,
- Fig. 4: die praktische Realisierung des neuen Systems und
- Fig. 5: ein Beispiel für den zeitlichen Ablauf eines Messzyklus bei Verwendung eines µC und eines Transimpendanzverstärkers.

Durch die Verwendung spezieller Sensoren 4 und dem Einsatz der Leuchtdioden 1, 2 wird somit eine höhere Selektivität erreicht.

Die Fig. 4 zeigt in schematischer Darstellung die praktische Realisierung des Systems.

In Fig. 5 sind ausreichend Zeiten für Einschwingvorgänge vorgesehen, die durch den verwendeten Verstärker entstehen.

Folgende Neuheiten, die dieses Sensorsystem von anderen unterscheidet:

Neu ist vor allem der Einsatz der beiden Sensoren 4, die - ohne zusätzlichen Filter- nur in bestimmten Wellenlängenbereichen empfindlich sind.

Diese speziellen Sensoren 4 werden mit einer gepulsten Lichtquelle kombiniert 1, 2, die wiederum auch nur in einem diskreten Spektralbereich Strahlung emittiert. Dies bringt den Vorteil einer höheren Selektivität und somit bessere Ergebnisse bei der Unterscheidung bezüglich des Boden. und den Pflanzen 6.

In dem Flussdiagramm gemäß Fig. 6 ist der Mess- und Auswertevorgang dargestellt.

Die Fig. 7 zeigt den schematischen Aufbau des Wellenlängensensors SSO-WS-7-56 der Fa. Silicon Sensor. Bei dem Wellenlängensensor der Fa. Silicon Sensor handelt es ich um den Typ SSOWS-7.56 TO5. Es ist ein Sensor, bei dem auf einem gemeinsamen Siliziumsubstrat vertikal zwei p-n Übergänge realisiert sind.

Die obere Diode (Diode 1) ist am empfindlichsten im Bereich um 550 nm bei einer Bandbreite von ~ 400-900 nm. Die Bandbreite der unteren Diode (Diode 2) liegt im Bereich von ~ 550 - >1000 nm. Die maximale Empfindlichkeit liegt hier bei ~ 900 nm. Die Empfindlichkeitskurve des Wellenlängensensors befindet sich im Bereich von 400 ... 1000 nm.

Der Wellenlängensensor ist für monochromatisches Licht optimiert und liefert die besten Ergebnisse bei senkrecht einfallender Strahlung.

Weiterhin kann der nicht dargestellte 3-elementige Farbsensor MCS3AT (ohne IR-Filter) und MCS3BT (mit IR-Filter) der Fa. MAZeT eingesetzt werden. Dabei handelt es sich um drei Silizium-PIN-Fotodioden, die auf einem Chip integriert sind. Jede dieser Dioden wird durch einen dielelektrischen Farbfilter für einen bestimmten Wellenlängenbereich sensibilisiert.

Die eingesetzten Farbfilter reflektieren die gesperrten Wellenlängenbereiche, dies erhöht zusätzlich die Alterungsbeständigkeit der Filter.

Für die optimale Funktion des Farbsensors wird vom Hersteller ein IR-Blocker empfohlen. Der Grund liegt in der Durchlässigkeit der einzelnen dielektrischen Farbfilter für IR-Strahlung. Diese transmittierte Strahlung hat direkten Einfluss auf die darunter liegende Diode, d.h. es findet eine Beeinflussung der Diodensignale statt. Im Empfindlichkeitsspektrum mit IR-Blocker wird das Spektrum größer 720 nm abgeschnitten.

## Patentansprüche

1. Vorrichtung zur berührlosen Ermittlung des Pflanzenbewuchses eines Feldabschnittes mit zumindest einer Licht aussendenden Lichtquelle und zumindest einem das reflektierende Licht empfangenden Sensor, **dadurch gekennzeichnet, dass** die Lichtquelle zumindest eine Leuchtdiode (1,2) ist.

2. Vorrichtung nach Anspruch 1, **dadurch gekennzeichnet, dass** mehrere Leuchtdioden (1,2)vorgesehen sind, welche um den Sensor (4) herum angeordnet sind.

3. Vorrichtung nach Anspruch 2, **dadurch gekennzeichnet, dass** Leuchtdioden (1,2) kreisförmig um den Sensor (4) herum angeordnet sind.

4. Vorrichtung nach Anspruch 1, **dadurch gekennzeichnet, dass** der Sensor (4) als Wellenlängensensor ausgebildet ist.

5. Vorrichtung nach Anspruch 1, **dadurch gekennzeichnet, dass** der Sensor (4) als Drei-Farben-Sensor ausgebildet ist.

6. Vorrichtung nach Anspruch 4, **dadurch gekennzeichnet, dass** dem Drei-Farben-Sensor (4) ein IR-Blocker zugeordnet ist.

7. Vorrichtung nach einem oder mehreren der vorstehenden Ansprüche, **dadurch gekennzeichnet, dass** die Leuchtdioden (1,2) das Licht in gepulster Weise aussenden.

8. Vorrichtung nach einem oder mehreren der vorstehenden Ansprüche, **dadurch gekennzeichnet, dass** die Lichtquelle (1,2) und der Sensor (4) als eine Baueinheit ausgebildet sind.

9. Vorrichtung nach einem oder mehreren der vorstehenden Ansprüche, **dadurch gekennzeichnet, dass** Leuchtdioden (1,2) für verschiedene Wellenlängenbereiche vorgesehen sind.

10. Vorrichtung nach einem oder mehreren der vorstehenden Ansprüche, **dadurch gekennzeichnet, dass** der Sensor für (4) verschiedene Wellenbereiche Empfangsdioden aufweist.

11. Vorrichtung nach einem oder mehreren der vorstehenden Ansprüche, **dadurch gekennzeichnet, dass** die Lichtquelle (1,2) und der Sensor (4) mit einer elektrischen Auswerteeinheit verbunden sind, in welcher ein Auswerteprogramm zur Ermittlung des Pflanzenbewuchsgrades des Feldabschnittes abgespeichert ist.

12. Vorrichtung nach einem oder mehreren der vorstehenden Ansprüche, **dadurch gekennzeichnet, dass** die Sensoren (4) ohne zusätzliche Filtereinsatz für einen eingeschränkten Spektralbereich sensibilisiert sind.
